# EUROPEAN PATENT APPLICATION

(11) **EP 4 783 488 A1**
(43) Date of publication of application: **29.07.2026**
(21) Application number: 24923830.4
(22) Date of filing: 24.06.2024
(51) Int. Cl.: H04B 11/00, H04B 1/16

(54) **COMMUNICATION SYSTEM, COMMUNICATION METHOD, AND PROGRAM**

(30) Priority: 06.02.2024 JP 2024016231
(71) Applicant: Terumo Kabushiki Kaisha, Tokyo 151-0072 (JP)
(72) Inventor: YAKUSHIJI, Yusuke, Ashigarakami-gun, Kanagawa 259-0151 (JP); OGAHARA, Atsushi, Ashigarakami-gun, Kanagawa 259-0151 (JP)
(74) Representative: Prüfer & Partner mbB Patentanwälte · Rechtsanwälte
(86) International application number: PCT/JP2024/022872
(87) International publication number: WO 2025/169509

(57) **Abstract**

A communication system (10) is a communication system (10) including a first device (12) and a second device (14) that communicates with the first device (12), in which the first device (12) includes a transmission unit (38) that transmits a reference signal to the second device (14) prior to transmission of a data signal to the second device (14), and the second device (14) includes a detection unit (54) that detects a frequency deviation of the reference signal transmitted from the first device (12), and a reception unit (52) that performs reception processing of the data signal transmitted from the first device (12) in consideration of the frequency deviation detected by the detection unit (54).

## Description

### Technical Field

The present disclosure relates to a communication system, a communication method, and a program.

### Background Art

JP 11-120424 A discloses a control device of a vending machine. The control device of a vending machine includes a main control unit and a plurality of terminal control units. The main control unit and each terminal control unit are communicably connected to each other by a communication line. The main control unit includes an oscillation circuit using a ceramic oscillator or a crystal oscillator. The terminal control unit includes a CR oscillation circuit. By matching the oscillation frequencies of the oscillation circuits, synchronous transmission between the main control unit and each terminal control unit becomes possible.

### Citation List

### Patent Literature

Patent Literature 1: JP 11-120424 A

### Summary of Invention

In an oscillation circuit with low accuracy such as a CR oscillation circuit, the oscillation frequency changes due to a disturbance such as a temperature change. In a communication system, when a frequency deviation occurs between an oscillation frequency in a first device on a transmission side and an oscillation frequency in a second device on a reception side, communication between the first device and the second device is affected. When the frequency deviation becomes large, the second device on the reception side cannot receive a signal.

An object of the present invention is to solve the above-described problem.
(1) A first aspect of the present disclosure is a communication system including a first device and a second device that communicates with the first device, in which the first device includes a transmission unit that transmits a reference signal to the second device prior to transmission of a data signal to the second device, and the second device includes a detection unit that detects a frequency deviation of the reference signal transmitted from the first device, and a reception unit that performs reception processing of the data signal transmitted from the first device in consideration of the frequency deviation detected by the detection unit.
   In the communication system described above, the reception unit of the second device performs reception processing of the data signal transmitted from the first device in consideration of the frequency deviation of the reference signal. Therefore, even if the frequency of the data signal transmitted from the first device deviates from the correct frequency, the reception unit of the second device can receive the data signal.
(2) In the communication system described in item (1), the transmission unit may perform transmission by one of frequency modulation and phase modulation.
(3) In the communication system described in item (1) or (2), the transmission unit may perform transmission by wireless communication.
(4) In the communication system described in item (3), the transmission unit may perform transmission by sound wave communication.
(5) In the communication system according to any one of items (1) to (4), the first device may be a medical device.
(6) In the communication system according to any one of items (1) to (5), the second device may include a storage unit that stores a table in which a frequency value of the data signal transmitted from the first device and a data value indicated by the data signal are associated with each other, the transmission unit may perform transmission by frequency modulation, and the reception unit may correct the frequency value of the table stored in the storage unit on the basis of the frequency deviation, and recognize the data value indicated by the data signal transmitted from the first device on the basis of the frequency value of the data signal transmitted from the first device and the corrected table.
(7) In the communication system according to any one of items (1) to (5), the second device may include a storage unit that stores a table in which a frequency value of the data signal transmitted from the first device is associated with a data value indicated by the data signal, the transmission unit may perform transmission by frequency modulation, and the reception unit may detect the frequency value of the data signal transmitted from the first device, correct the detected frequency value on the basis of the frequency deviation, and recognize the data value indicated by the data signal transmitted from the first device on the basis of the corrected frequency value and the table.
(8) A second aspect of the present disclosure is a communication method for performing communication between a first device and a second device, the communication method including: a transmission step of transmitting a reference signal from the first device to the second device prior to transmission of a data signal from the first device to the second device; a detection step of detecting, by the second device, a frequency deviation of the reference signal transmitted from the first device; and a reception step of performing reception processing, by the second device, on the data signal transmitted from the first device in consideration of the frequency deviation detected in the detection step.
   In the communication method described above, in the reception step, the reception processing of the data signal transmitted from the first device is performed in consideration of the frequency deviation of the reference signal. Therefore, even if the frequency of the data signal transmitted from the first device deviates from the correct frequency, the second device can receive the data signal.
(9) A third aspect of the present disclosure is a program for causing a computer included in a second device that communicates with a first device to execute: a first reception step of performing reception processing of a reference signal transmitted from the first device prior to reception of a data signal from the first device; a detection step of detecting a frequency deviation of the reference signal received in the first reception step; and a reception step of performing reception processing of the data signal transmitted from the first device in consideration of the frequency deviation detected in the detection step.

According to the present invention, it is possible to satisfactorily transmit a signal from the first device to the second device.

### Brief Description of Drawings

[Fig. 1] Fig. 1 is a functional block diagram of a communication system according to an embodiment of the present invention.
[Fig. 2] Fig. 2 is an explanatory diagram of a configuration of a medical device (liquid medicine administration device).
[Fig. 3] Fig. 3 is a sequence diagram of communication processing executed in the communication system.

### Description of Embodiments

If each device constituting a communication system includes an oscillation circuit with high accuracy, frequency deviation can be suppressed. Accordingly, communication can be performed satisfactorily.

On the other hand, according to the present invention, communication can be suitably performed even when an oscillation circuit with low accuracy is provided in any device constituting a communication system. That is, the present invention enables satisfactory communication regardless of the accuracy of the oscillation circuit. Hereinafter, an embodiment of the present invention will be described.

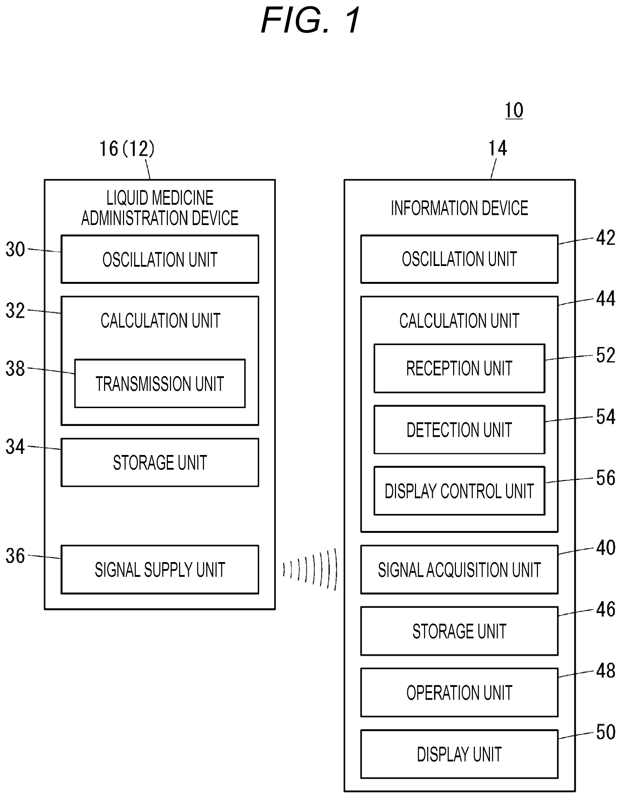

Fig. 1 is a functional block diagram of a communication system 10 according to an embodiment of the present invention. An embodiment described below is the communication system 10 capable of transmitting medical information from a medical device (first device) 12 to an information device (second device) 14 by wireless communication (sound wave communication) using sound waves. Note that the first device is not limited to the medical device 12. The second device is not limited to the information device 14. In addition, wireless communication using radio waves may be performed instead of wireless communication using sound waves. Furthermore, communication from the medical device 12 to the information device 14 may be performed via a communication cable. That is, the communication system 10 may perform wired communication.

### [1 Configuration of Communication System 10]

As illustrated in Fig. 1, the communication system 10 according to the present embodiment includes the medical device 12 and the information device 14. The communication system 10 is a system in which the information device 14 acquires medical information held by the medical device 12.

In the communication system 10, the medical device 12 and the information device 14 may each be a single unit or a plurality of units. For example, in a case where the communication system 10 is used in a hospital or the like, it can be assumed that the communication system 10 includes a plurality of medical devices 12. In this case, for example, one information device 14 can manage the medical information of the plurality of medical devices 12 separately. Furthermore, the communication system 10 may include a plurality of types of medical devices 12 (for example, a liquid medicine administration device 16, a sphygmomanometer, a thermometer, and the like). In this case, for example, one information device 14 can manage medical information related to a plurality of types of medical devices 12 of a plurality of patients.

### [1-1 Configuration of Medical Device 12 (Liquid Medicine Administration Device 16)]

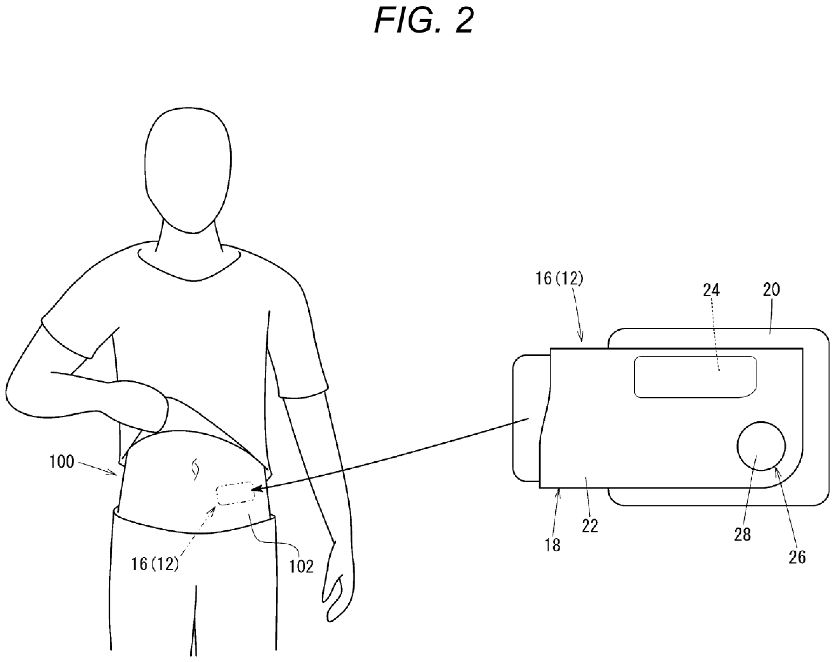

Fig. 2 is an explanatory diagram of a configuration of the medical device 12 (liquid medicine administration device 16). As illustrated in Fig. 2, the medical device 12 is a device attachable to and detachable from a living body 100. In other words, the medical device 12 is used in a state of being in contact with the skin (body surface 102) of the living body 100. The medical device 12 can acquire medical information in a state of being attached to the living body 100. In the present embodiment, the liquid medicine administration device 16 for administering a liquid medicine to the living body 100 is exemplified as the medical device 12. Note that the medical device 12 is not limited to the liquid medicine administration device 16, and may be a measuring instrument such as a sphygmomanometer, a thermometer, a blood glucose meter, or a pulse oximeter.

The liquid medicine administration device 16 is a patch-type device to be affixed to the body surface 102. The liquid medicine administration device 16 continuously administers a liquid medicine into the living body 100 over a relatively long time (for example, about several minutes to several hours). The liquid medicine administration device 16 may intermittently administer the liquid medicine into the living body 100. Examples of the liquid medicine include protein preparations such as insulin preparations. Examples of a drug include a narcotic analgesic and a diuretic.

The liquid medicine administration device 16 includes a device body 18 and an attachment member 20. The device body 18 includes a housing 22, a prefilled syringe 24, and a puncture unit 26. The housing 22 accommodates various members including the prefilled syringe 24. The inside of the prefilled syringe 24 is filled with a liquid medicine in advance. The puncture unit 26 includes a puncture operation unit 28 for operating a puncture needle (not illustrated). When a user presses the puncture operation unit 28, the puncture needle protrudes from the housing 22. The attachment member 20 is fixed to the housing 22. The attachment member 20 has an adhesive surface that can be affixed to the body surface 102.

In such a liquid medicine administration device 16, the user (for example, a patient) presses the puncture operation unit 28 in a state where the attachment member 20 is affixed to the body surface 102, whereby the living body 100 is punctured with the puncture needle. Thereafter, the administration of the liquid medicine from the prefilled syringe 24 to the living body 100 is started. When the administration of the liquid medicine is completed, the user removes the liquid medicine administration device 16 from the body surface 102.

As illustrated in Fig. 1, the liquid medicine administration device 16 further includes an oscillation unit 30, a calculation unit (computer) 32, a storage unit 34, and a signal supply unit 36. Note that the liquid medicine administration device 16 may also include components other than the above-mentioned components, but the description thereof is omitted here.

The oscillation unit 30 is configured by including, for example, an oscillation circuit (CR oscillation circuit, LC oscillation circuit, ring oscillator, or the like), a frequency divider, and the like. The oscillation unit 30 continuously generates an electric signal having a predetermined oscillation frequency.

The calculation unit 32 is configured by, for example, a processor such as a central processing unit (CPU) or a graphics processing unit (GPU). That is, the calculation unit 32 is configured by processing circuitry. The calculation unit 32 includes a transmission unit 38. The transmission unit 38 can be implemented by executing a program stored in the storage unit 34 by the calculation unit 32.

Note that at least a part of the transmission unit 38 may be implemented by an integrated circuit such as an application specific integrated circuit (ASIC) or a field-programmable gate array (FPGA). Furthermore, at least a part of the transmission unit 38 may be configured by an electronic circuit including a discrete device.

The transmission unit 38 performs transmission processing for transmitting a signal indicating medical information to the information device 14. For example, the transmission unit 38 reads the medical information stored in the storage unit 34. The medical information is configured by, for example, a binary data string. That is, the medical information is configured by data (digital values) of a plurality of bits. The transmission unit 38 can sequentially read 1-bit data from the data string.

The transmission unit 38 generates a data signal corresponding to the data (digital value) read from the storage unit 34, and outputs the generated data signal to the signal supply unit 36. In this manner, the transmission unit 38 generates and sequentially outputs each of the data signal indicating 0 and the data signal indicating 1.

The transmission unit 38 modulates each of the two different data signals to an electric signal having a frequency corresponding to each data signal on the basis of the electric signal generated by the oscillation unit 30. For example, the transmission unit 38 generates a data signal modulated by frequency shift keying (FSK). When transmitting a data signal indicating 0, the transmission unit 38 generates an electric signal having a frequency of f1 and outputs the electric signal to the signal supply unit 36. The frequency f1 is, for example, 14 kHz, but is not limited thereto. When transmitting a data signal indicating 1, the transmission unit 38 generates an electric signal having a frequency of f2 and outputs the electric signal to the signal supply unit 36. The frequency f2 is, for example, 20 kHz, but is not limited thereto.

The transmission unit 38 performs transmission processing for transmitting a reference signal to the information device 14 prior to transmission of a data signal to the information device 14. The reference signal is a signal used to correct (calibrate) a frequency deviation between an oscillation frequency in the liquid medicine administration device 16 and an oscillation frequency in the information device 14. When transmitting the reference signal, the transmission unit 38 generates an electric signal having a frequency of f3 and outputs the electric signal to the signal supply unit 36. The frequency f3 is, for example, 18 kHz, but is not limited thereto. Note that the frequency of the reference signal may be the same as the frequency (f1 or f2) of the data signal.

The storage unit 34 is configured by a volatile memory (not illustrated) and a non-volatile memory (not illustrated). Examples of the volatile memory include a random access memory (RAM). The volatile memory is used as a working memory of the processor, and temporarily stores data and the like necessary for processing or calculation. Examples of the non-volatile memory include a read only memory (ROM) and a flash memory. The non-volatile memory is used as a memory for storage, and stores a program, a table, a map, and the like. At least a part of the storage unit 34 may be provided in the processor, the integrated circuit, or the like as described above.

The storage unit 34 stores medical information in advance. In a case where the medical device 12 is the liquid medicine administration device 16, the medical information includes identification information (serial number) of the liquid medicine administration device 16 and administration end information for notifying that the administration of the liquid medicine has ended normally or abnormally. Note that in a case where the medical device 12 is a measuring instrument (sphygmomanometer or the like), the medical information includes identification information of the measuring instrument and vital information (blood pressure or the like) measured by the measuring instrument.

The signal supply unit 36 is configured by, for example, a speaker. The signal supply unit 36 converts the electric signal generated by the transmission unit 38 into sound waves and outputs the sound waves. The signal supply unit 36 converts the electric signal having the frequency of f1 into sound waves having the frequency of f1, and outputs the sound waves. The signal supply unit 36 converts the electric signal having the frequency of f2 into sound waves having the frequency f2, and outputs the sound waves. The signal supply unit 36 converts the electric signal having the frequency of f3 into sound waves having a frequency of f3, and outputs the sound waves.

Note that in the communication system 10, in a case where a radio wave signal is transmitted from the liquid medicine administration device 16 to the information device 14, the signal supply unit 36 is configured by, for example, an antenna. In this case, the signal supply unit 36 outputs radio waves of an electric signal of each frequency.

### [1-2 Configuration of Information Device 14]

Examples of the information device 14 include, but are not limited to, a smartphone and a tablet. The information device 14 can acquire medical information from the liquid medicine administration device 16. The information device 14 can manage the medical information acquired from the liquid medicine administration device 16.

The information device 14 includes a signal acquisition unit 40, an oscillation unit 42, a calculation unit (computer) 44, a storage unit 46, an operation unit 48, and a display unit 50. The information device 14 may include components other than these components, but the description thereof is omitted here.

The signal acquisition unit 40 is configured by, for example, a microphone. The signal acquisition unit 40 acquires sound waves transmitted from the liquid medicine administration device 16, converts the acquired sound waves into an electric signal, and outputs the electric signal to the calculation unit 44. For example, the signal acquisition unit 40 converts sound waves having the frequency of f1 into an electric signal having the frequency of f1, and outputs the electric signal. The signal acquisition unit 40 converts sound waves having the frequency of f2 into an electric signal having the frequency of f2 and outputs the electric signal. The signal acquisition unit 40 converts sound waves having the frequency of f3 into an electric signal having the frequency of f3 and outputs the electric signal.

The oscillation unit 42 is configured by including, for example, an oscillation circuit (CR oscillation circuit, LC oscillation circuit, ring oscillator, crystal oscillation circuit, and the like), a frequency divider, and the like. The oscillation unit 42 continuously generates an electric signal having a predetermined oscillation frequency.

The calculation unit 44 is configured by a processor such as a CPU or a GPU. That is, the calculation unit 44 is configured by a processing circuit. The calculation unit 44 includes a reception unit 52, a detection unit 54, and a display control unit 56. The reception unit 52, the detection unit 54, and the display control unit 56 can be implemented by executing a program stored in the storage unit 46 by the calculation unit 44.

Note that at least a part of the reception unit 52, the detection unit 54, and the display control unit 56 may be implemented by an integrated circuit such as an ASIC or an FPGA. Furthermore, at least a part of the reception unit 52, the detection unit 54, and the display control unit 56 may be configured by an electronic circuit including a discrete device.

The reception unit 52 performs processing for receiving a signal transmitted from the liquid medicine administration device 16. The reception unit 52 performs spectrum analysis of the electric signal output from the signal acquisition unit 40 by, for example, fast Fourier transformation (FFT). The reception unit 52 detects the frequency of the signal transmitted from the liquid medicine administration device 16 by performing spectrum analysis. On the basis of the detected frequency value, the reception unit 52 identifies whether the transmitted signal is a data signal indicating 0, a data signal indicating 1, or a reference signal. In the present specification, the value of the frequency is also referred to as a frequency value.

The detection unit 54 detects a frequency deviation of a reference signal transmitted from the liquid medicine administration device 16 prior to transmission of the data signal. For example, the detection unit 54 detects the frequency deviation of the reference signal transmitted from the liquid medicine administration device 16 by comparing the frequency value of the reference signal detected by the reception unit 52 with the correct frequency value of the reference signal.

The storage unit 46 is configured by a volatile memory (not illustrated) and a non-volatile memory (not illustrated). Examples of the volatile memory include a RAM and the like, for example. The volatile memory is used as a working memory of the processor, and temporarily stores data and the like necessary for processing or calculation. Examples of the non-volatile memory include a ROM and a flash memory. The non-volatile memory is used as a memory for storage, and stores a program, a table, a map, and the like. At least a part of the storage unit 46 may be provided in the processor, the integrated circuit, or the like as described above.

The storage unit 46 stores a frequency table that associates the type (content) of a signal with a frequency value of the signal transmitted from the liquid medicine administration device 16. In the frequency table, a type "data signal indicating 0" is associated with the frequency value of f1. In the frequency table, a type "data signal indicating 1" is associated with the frequency value of f2. In the frequency table, a type "reference signal" is associated with the frequency value of f3.

The operation unit 48 is used when the user operates the information device 14. The display unit 50 includes a display element (not illustrated). As the display element, for example, a liquid crystal display element, an organic electroluminescence display element, or the like is used. The operation unit 48 and the display unit 50 can be configured by a touch panel (not illustrated) provided with such a display element, but are not limited thereto. The operation unit 48 may be configured by a keyboard, a mouse, or the like.

### [2 Communication Processing in Communication System 10]

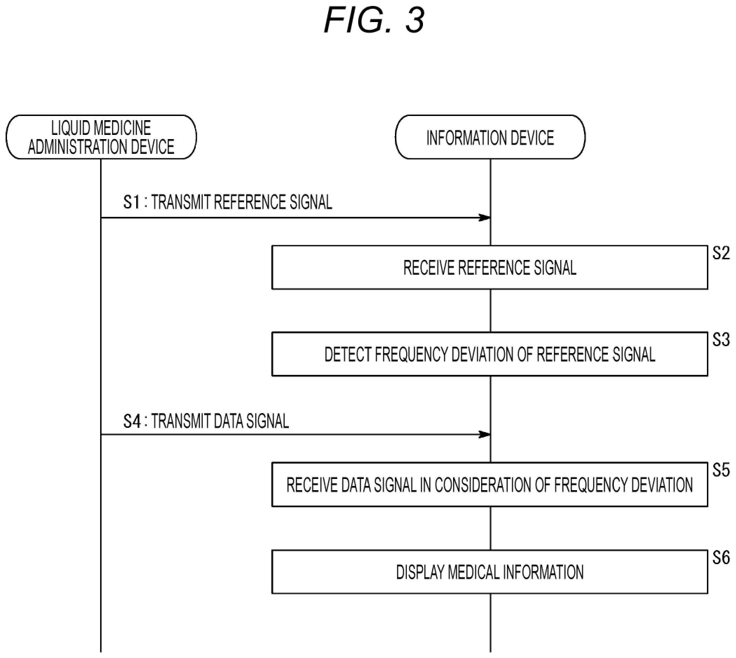

Fig. 3 is a sequence diagram of communication processing executed in the communication system 10. The liquid medicine administration device 16 performs transmission processing to the information device 14 at a predetermined timing. For example, when the administration of the liquid medicine to the living body 100 is completed, a sensor (not illustrated) included in the liquid medicine administration device 16 outputs a signal indicating that the administration of the liquid medicine is completed to the calculation unit 32. When receiving this signal, the calculation unit 32 executes communication processing described below.

In step S1 (transmission step), the transmission unit 38 of the liquid medicine administration device 16 performs processing for transmitting a reference signal. The transmission unit 38 generates an electric signal having the frequency of f3 on the basis of an electric signal generated by the oscillation unit 30, and outputs the electric signal to the signal supply unit 36. The signal supply unit 36 converts the electric signal acquired from the transmission unit 38 into sound waves and transmits the sound waves to the information device 14. The sound waves are a reference signal.

In step S2 (first reception step), the reception unit 52 of the information device 14 receives the reference signal via the signal acquisition unit 40. Specifically, the signal acquisition unit 40 receives sound waves (reference signal) transmitted from the liquid medicine administration device 16. The signal acquisition unit 40 converts the sound waves (reference signal) into an electric signal and outputs the electric signal. The reception unit 52 performs spectrum analysis by FFT on the electric signal acquired from the signal acquisition unit 40, and detects the frequency having the highest intensity.

In step S3 (detection step), the detection unit 54 of the information device 14 detects a frequency deviation of a signal transmitted first from the liquid medicine administration device 16, that is, a reference signal. The detection unit 54 detects the frequency deviation of the reference signal on the basis of the frequency table stored in the storage unit 46. Specifically, the detection unit 54 compares the frequency value of the reference signal detected by the reception unit 52 in step S2 with the frequency value of the reference signal in the frequency table. The difference between the two frequency values corresponds to the frequency deviation of the reference signal transmitted from the liquid medicine administration device 16. For example, when the frequency value of the reference signal transmitted from the liquid medicine administration device 16 is larger than the frequency value of the reference signal in the frequency table stored in the storage unit 46 by fx, the detection unit 54 detects a frequency deviation of +fx. For example, when the frequency value of the reference signal transmitted from the liquid medicine administration device 16 is smaller by fx than the frequency value of the reference signal in the frequency table stored in the storage unit 46, the detection unit 54 detects a frequency deviation of -fx.

Each processing of steps S4 and S5 described below is executed once for each data included in the data string to be transmitted from the liquid medicine administration device 16 to the information device 14. The processing of each of steps S4 and S5 is repeatedly executed until the transmission of all the data is completed.

In step S4, the transmission unit 38 of the liquid medicine administration device 16 performs processing for transmitting a data signal. After transmitting the reference signal in step S1, the transmission unit 38 reads the medical information stored in the storage unit 34. When reading the medical information, the transmission unit 38 sequentially reads 1-bit data from a data string indicating the medical information. The transmission unit 38 performs frequency modulation according to the value indicated by the read data. For example, in a case where the read data is 0, the transmission unit 38 generates an electric signal having the frequency of f1 on the basis of the electric signal generated by the oscillation unit 30. On the other hand, when the read data is 1, the transmission unit 38 generates an electric signal having the frequency of f2 on the basis of the electric signal generated by the oscillation unit 30. The signal supply unit 36 converts the electric signal generated by the transmission unit 38 into sound waves and transmits the sound waves to the information device 14. The sound waves are a data signal corresponding to data of 0 or 1.

In step S5 (reception step), the reception unit 52 of the information device 14 receives the data signal via the signal acquisition unit 40. Here, the reception unit 52 receives the data signal in consideration of the frequency deviation detected in step S3. Examples of the method of taking the frequency deviation into consideration include a first method and a second method. In the first method, the reception unit 52 corrects the frequency value in the frequency table stored in the storage unit 46 on the basis of the frequency deviation. The reception unit 52 corrects the frequency table by the first method once before the processing of step S5. On the other hand, in the second method, every time the frequency of the data signal is detected, the reception unit 52 corrects the detected frequency value of the data signal on the basis of the frequency deviation. The reception unit 52 corrects the frequency value of the data signal by the second method every time the processing in step S5 is performed.

The first method is now described. For example, it is assumed that the frequency deviation detected by the detection unit 54 in step S3 is +fx. In this case, the reception unit 52 corrects the frequency table by adding fx to each frequency value (f1, f2) in the frequency table. Meanwhile, it is assumed that the frequency deviation detected by the detection unit 54 in step S3 is -fx. In this case, the reception unit 52 corrects the frequency table by subtracting fx from each frequency value (f1, f2) in the frequency table.

After correcting the frequency table, the reception unit 52 receives each data signal via the signal acquisition unit 40. Specifically, the signal acquisition unit 40 converts sound waves (data signal) into an electric signal and outputs the electric signal. The reception unit 52 performs spectrum analysis by FFT on the electric signal acquired from the signal acquisition unit 40, and detects the frequency having the highest intensity. The reception unit 52 recognizes the data value indicated by the data signal on the basis of the detected frequency value and the corrected frequency table.

The second method is now described. The reception unit 52 receives each data signal via the signal acquisition unit 40. Specifically, the signal acquisition unit 40 converts sound waves (data signal) into an electric signal and outputs the electric signal. The reception unit 52 performs spectrum analysis by FFT on the electric signal acquired from the signal acquisition unit 40, and detects the frequency having the highest intensity.

Similarly to the description of the first method, for example, it is assumed that the frequency deviation detected by the detection unit 54 in step S3 is +fx. In this case, the reception unit 52 subtracts fx from the frequency value of the detected data signal. The reception unit 52 recognizes the data value indicated by the data signal on the basis of the corrected (subtracted) frequency value and the frequency table. Meanwhile, it is assumed that the frequency deviation detected by the detection unit 54 in step S3 is -fx. In this case, the reception unit 52 adds fx to the frequency value of the detected data signal. The reception unit 52 recognizes the data value indicated by the data signal on the basis of the corrected (added) frequency value and the frequency table.

In step S6, the display control unit 56 of the information device 14 performs display control for displaying medical information (identification information of the liquid medicine administration device 16 and administration end information) on the display unit 50. As a result, the display unit 50 displays a message notifying that the administration of the liquid medicine has ended normally or abnormally in the liquid medicine administration device 16.

### [3 Modification]

In the embodiment described above, the modulation scheme used by the transmission unit 38 of the liquid medicine administration device 16 is frequency modulation. Note that the modulation scheme used by the transmission unit 38 may be phase modulation.

### [4 Effects]

The liquid medicine administration device 16 is a disposable product. Therefore, for example, it is conceivable to use an inexpensive oscillation circuit (CR oscillation circuit, LC oscillation circuit, ring oscillator, or the like) for the transmission unit 38 of the liquid medicine administration device 16. However, an inexpensive oscillation circuit has a problem of low accuracy. An oscillation frequency deviation is likely to occur in an oscillation circuit with low accuracy.

In the communication system 10 described above, the reception unit 52 of the information device 14 performs reception processing of the data signal transmitted from the liquid medicine administration device 16 in consideration of the frequency deviation of the reference signal. Therefore, even if the frequency of the data signal transmitted from the liquid medicine administration device 16 deviates from the correct frequency, the reception unit 52 of the information device 14 can satisfactorily receive the data signal.

Although the present disclosure has been described in detail, the present disclosure is not limited to the individual embodiments described above. Various additions, substitutions, modifications, partial deletions, and the like may be made to these embodiments without departing from the gist of the present disclosure or without departing from the spirit of the present disclosure derived from the content described in the claims and equivalents thereof. Further, the embodiments can be implemented in combination. For example, the order of operations and the order of processes in the above embodiments are provided as an example, and they are not limitative. The same applies to the case where numerical values or expressions are used in the description of the above embodiments.

## Claims

1. A communication system comprising a first device and a second device that communicates with the first device, wherein
the first device includes a transmission unit that transmits a reference signal to the second device prior to transmission of a data signal to the second device, and
the second device includes
a detection unit that detects a frequency deviation of the reference signal transmitted from the first device, and
a reception unit that performs reception processing of the data signal transmitted from the first device in consideration of the frequency deviation detected by the detection unit.

2. The communication system according to claim 1, wherein the transmission unit performs transmission by one of frequency modulation and phase modulation.

3. The communication system according to claim 1, wherein the transmission unit performs transmission by wireless communication.

4. The communication system according to claim 3, wherein the transmission unit performs transmission by sound wave communication.

5. The communication system according to any one of claims 1 to 4, wherein the first device is a medical device.

6. The communication system according to claim 1, wherein:
the second device includes a storage unit that stores a table in which a frequency value of the data signal transmitted from the first device and a data value indicated by the data signal are associated with each other;
the transmission unit performs transmission by frequency modulation; and
the reception unit corrects the frequency value of the table stored in the storage unit on the basis of the frequency deviation, and recognizes the data value indicated by the data signal transmitted from the first device on the basis of the frequency value of the data signal transmitted from the first device and the corrected table.

7. The communication system according to claim 1, wherein:
the second device includes a storage unit that stores a table in which a frequency value of the data signal transmitted from the first device is associated with a data value indicated by the data signal;
the transmission unit performs transmission by frequency modulation; and
the reception unit detects the frequency value of the data signal transmitted from the first device, corrects the detected frequency value on the basis of the frequency deviation, and recognizes the data value indicated by the data signal transmitted from the first device on the basis of the corrected frequency value and the table.

8. A communication method for performing communication between a first device and a second device, the communication method comprising:
a transmission step of transmitting a reference signal from the first device to the second device prior to transmission of a data signal from the first device to the second device;
a detection step of detecting, by the second device, a frequency deviation of the reference signal transmitted from the first device; and
a reception step of performing reception processing, by the second device, on the data signal transmitted from the first device in consideration of the frequency deviation detected in the detection step.

9. A program for causing a computer included in a second device that communicates with a first device to execute:
a first reception step of performing reception processing of a reference signal transmitted from the first device prior to reception of a data signal from the first device;
a detection step of detecting a frequency deviation of the reference signal received in the first reception step; and
a reception step of performing reception processing of the data signal transmitted from the first device in consideration of the frequency deviation detected in the detection step.
